# EUROPÄISCHE PATENTSCHRIFT

(11) **EP 2 561 460 B1**
(45) Veröffentlichungstag und Bekanntmachung des Hinweises auf die Patenterteilung: **31.10.2018**
(21) Anmeldenummer: 11717192.6
(22) Anmeldetag: 21.04.2011
(51) Int. Cl.: G06F 21/62

(54) **VERFAHREN ZUM KONFIGURIEREN EINER APPLIKATION FÜR EIN ENDGERÄT**
METHOD FOR CONFIGURING AN APPLICATION FOR A TERMINAL
PROCÉDÉ DE CONFIGURATION D'UNE APPLICATION POUR UN TERMINAL

(30) Priorität: 23.04.2010 DE 102010018021
(43) Veröffentlichungstag der Anmeldung: 27.02.2013
(73) Patentinhaber: Giesecke+Devrient Mobile Security GmbH, 81677 München (DE)
(72) Erfinder: SPITZ, Stephan, 85757 Karlsfeld (DE)
(74) Vertreter: Ter Meer Steinmeister & Partner
(86) Internationale Anmeldenummer: PCT/EP2011/002046
(87) Internationale Veröffentlichungsnummer: WO 2011/131365

(56) Entgegenhaltungen:
- EP-A1- 1 686 775
- DE-A1-102005 056 357
- DE-A1-102007 051 440
- US-A1- 2008 270 302
- US-A1- 2009 018 924

## Beschreibung

Die Erfindung betrifft ein Verfahren zum Konfigurieren einer Applikation für ein Endgerät sowie ein entsprechendes System zum Konfigurieren einer Applikation. Ferner betrifft die Erfindung einen Server und ein Endgerät zur Verwendung in einem Verfahren zum Konfigurieren einer Applikation.

Zum Absichern von mit Hilfe von Endgeräten durchgeführten Applikationen, beispielsweise im Rahmen eines bargeldlosen Bezahlvorgangs oder eines elektronischen Erwerbs von Tickets, können gemäß dem Stand der Technik verschiedene Endgeräte-Konfigurationen basierend auf unterschiedlichen Sicherheitslösungen auf dem Endgerät implementiert werden. Dabei erweist es sich als nachteilig, dass für die verschiedenen Endgeräte-Konfigurationen separate Applikationen verwendet werden müssen. Dies macht es erforderlich, dass durch den Betreiber der Applikation verschiedene Versionen der entsprechenden Applikation bereitgestellt werden müssen.

Parallel ausgeführten virtuellen Maschinen auf einer Karte werden in DE 102005056357 A1 unterschiedliche Betriebsmittelkontingente zugewiesen. US 2008/0270302 A1 und US 2009/0018924 A1 zeigen jeweils ein Mobilfunkgerät, in welchem eine Applikation für Finanztransaktionen ausgeführt wird.

DE 102007051440 A1 betrifft die Freischaltung von Software in einem Kraftfahrzeug, wobei ein Server eine Freischaltungsanfrage empfängt und einen Freischaltcode für eine Ist-Konfiguration der freizuschaltenden Software bereitstellt. Im Kraftfahrzeug wird die mit dem Freischaltcode übermittelte Ist-Konfiguration mit der vorhandenen Ist-Konfiguration der Software verglichen, bevor diese Software freigeschaltet wird.

In EP 1 686 775 A1 wird eine Applikation auf einem Endgerät mittels einer Aktivierungseinheit des Endgerätes freigeschaltet. Die Aktivierungseinheit sendet eine Aktivierungsanfrage an einen Server und erhält eine Aktivierungsbestätigung für die (unveränderte) Applikation.

Aufgabe der Erfindung ist es, auf einfache Weise eine Applikation für ein Endgerät in Abhängigkeit von der Sicherheitslösung auf dem Endgerät zu konfigurieren.

Diese Aufgabe wird durch den Gegenstand der unabhängigen Ansprüche gelöst. Weiterbildungen der Erfindung sind in den abhängigen Ansprüchen definiert.

Das erfindungsgemäße Verfahren dient zum Konfigurieren einer Applikation für ein Endgerät, welches eine vorgegebene Endgeräte-Konfiguration mit einer zugeordneten Sicherheitsstufe aufweist. Eine Sicherheitsstufe stellt dabei ein Maß für die Sicherheit der Endgeräte-Konfiguration gegenüber Angriffen von unbefugten Dritten dar. Eine Endgeräte-Konfiguration betrifft insbesondere eine Ausführungsumgebung, in der die entsprechende Applikation ausgeführt wird. Beispiele solcher Ausführungsumgebungen sind gesicherte Laufzeitumgebungen in einem Mikroprozessor des Endgeräts (z.B. eine TrustZone) und/oder ein oder mehrere Sicherheitselemente (englisch: secure elements), welche z.B. als SIM/USIM-Modul in einem Mobilfunkgerät oder als separate µSD-Karte realisiert sein können. Ein Endgerät im Sinne der Erfindung kann ein beliebiges Kommunikationsgerät betreffen. In einer bevorzugten Ausführungsform ist das Endgerät ein mobiles Endgerät, beispielsweise in der Form eines Mobiltelefons bzw. eines mobilen Rechners (Notebook, Netbook).

In dem erfindungsgemäßen Verfahren wird in einem Schritt a) mittels der Applikation eine Anfrage zu der vorgegebenen Endgeräte-Konfiguration an eine zentrale Stelle gerichtet (gesendet), in welcher einer Vielzahl von Sicherheitsstufen von Endgeräte-Konfigurationen jeweilige Applikations-Konfigurationen zugeordnet sind. Die zentrale Stelle wählt in Antwort auf die Anfrage die vorgegebene Sicherheitsstufe der vorgegebenen Endgeräte-Konfiguration aus der Vielzahl von Sicherheitsstufen aus. Die der ermittelten, vorgegebenen Sicherheitsstufe zugeordnete Applikations-Konfiguration gibt die zentrale Stelle an die Applikation aus. Anschließend werden in einem Schritt b) mittels der Applikation eine oder mehrere Funktionen der Applikation basierend auf der ausgegebenen Applikations-Konfiguration für das Endgerät konfiguriert (z.B. freigeschaltet). Somit wird die Applikation an die ermittelte Sicherheitsstufe der Endgerätekonfiguration angepasst.

Das erfindungsgemäße Verfahren zeichnet sich dadurch aus, dass über eine zentrale Verwaltung in einer zentralen Stelle eine Applikation in Abhängigkeit von verschiedenen Sicherheitsstufen geeignet konfiguriert werden kann.

Dabei kann ein und dieselbe Applikation für Endgeräte mit unterschiedlichen Endgeräte-Konfigurationen verwendet werden. Hierdurch können Kosten für unterschiedliche Zertifizierungen eingespart werden. Ferner müssen die unterschiedlichen Sicherheitsstufen und entsprechenden Applikations-Konfigurationen dem Endgerät nicht bekannt sein, da diese von der zentralen Stelle abgefragt werden können. Durch diese zentrale Verwaltung können auch auf einfache Weise neue Endgeräte-Konfigurationen in dem Prozess der Konfiguration der Applikation eingebunden werden.

In einer besonders bevorzugten Ausführungsform ist die Vielzahl von Sicherheitsstufen mit zugeordneten Applikations-Konfigurationen in einer Tabelle in der zentralen Stelle hinterlegt, wobei in Schritt a) über eine Tabellenabfrage die vorgegebene Sicherheitsstufe der vorgegebenen Endgeräte-Konfiguration aus der Vielzahl von Sicherheitsstufen ermittelt wird. Diese Variante hat den Vorteil, dass gegebenenfalls gängige Tabellen- bzw. Datenbankabfrage-Sprachen zur Ermittlung der vorgegebenen Sicherheitsstufe verwendet werden können.

Um eine ausreichende Sicherheit bei der Durchführung des erfindungsgemäßen Verfahrens zu erreichen, werden in einer besonders bevorzugten Ausführungsform in Schritt a) die Anfrage zu der vorgegebenen Endgeräte-Konfiguration sowie die darauf basierende Ausgabe der zentralen Stelle über einen oder mehrere kryptographisch gesicherte Kanäle übermittelt.

In einer weiteren Variante des erfindungsgemäßen Verfahrens authentisiert sich das Endgerät mit Authentisierungsdaten, insbesondere mit einem oder mehreren Schlüsseln, wobei anschließend basierend auf den Authentisierungsdaten die vorgegebene Sicherheitsstufe in der zentralen Stelle ermittelt wird. Die Authentisierung kann dabei z.B. direkt an der zentralen Stelle erfolgen. Es besteht jedoch auch die Möglichkeit, dass die Authentisierung an einem zwischengeschalteten Hintergrundsystem erfolgt, welches über die Applikation mit dem Endgerät wechselwirkt. Generell kann die Applikation eine verteilte Applikation sein, bei der ein Teil der Applikation auf dem Endgerät und ein Teil der Applikation auf einem entsprechenden Hintergrundsystem abläuft, welches mit dem Endgerät kommuniziert. Das Hintergrundsystem ist dabei insbesondere ein entsprechender Server.

Bei der Verwendung einer verteilten Applikation wird in Schritt a) die Anfrage zu der vorgegebenen Endgeräte-Konfiguration vorzugsweise über das Hintergrundsystem an die zentrale Stelle gerichtet. Um eine Konfiguration der Applikation durch unbefugte Dritte zu vermeiden, muss sich in einer bevorzugten Ausführungsform das Endgerät am Hintergrundsystem über Authentisierungsdaten authentisieren, bevor das Hintergrundsystem eine Anfrage zu der vorgegebenen Endgeräte-Konfiguration an die zentrale Stelle richten kann. Wie oben erwähnt, werden dabei die Authentisierungsdaten vorzugsweise auch zur Ermittlung der vorgegebenen Sicherheitsstufe der vorgegebenen Endgeräte-Konfiguration in der zentralen Stelle verwendet.

In einer weiteren Ausführungsform des erfindungsgemäßen Verfahrens wird durch die Applikation das Vorhandensein der vorgegebenen Endgeräte-Konfiguration auf dem Endgerät und/oder die Zuordnung der in Schritt b) konfigurierten Funktionen der Applikation zu der vorgegebenen Endgeräte-Konfiguration verifiziert, wobei nur bei erfolgreicher Verifikation die Konfiguration der Applikation erfolgreich abgeschlossen werden kann. Hierdurch wird die Sicherheit gegenüber Angriffen Dritter bei der Konfiguration der Applikation erhöht, da immer sichergestellt wird, dass es zu der konfigurierten Applikation auch immer eine dafür vorgesehene Endgeräte-Konfiguration gibt.

Die durch die Applikation konfigurierten Funktionen der Applikation können beliebig ausgestaltet sein. Insbesondere können ein Limit einer mit der Applikation durchführbaren monetären Transaktion und/oder ein Gültigkeitszeitraum von einem oder mehreren Authentisierungsschlüsseln der Applikation und/oder die Laufzeit von mit der Applikation erwerbbaren elektronischen Tickets konfiguriert werden.

Neben dem oben beschriebenen Verfahren betrifft die Erfindung ferner ein System zum Konfigurieren einer Applikation für ein Endgerät. Das System umfasst dabei ein Endgerät, welches eine vorgegebene Endgeräte-Konfiguration mit einer vorgegebenen Sicherheitsstufe aufweist, sowie eine zentrale Stelle, in welcher einer Vielzahl von Sicherheitsstufen von Endgeräte-Konfigurationen jeweilige Applikations-Konfigurationen zugeordnet sind. Das System ist dabei derart ausgestaltet, dass in dem System das erfindungsgemäße Verfahren bzw. eine oder mehrere der oben beschriebenen Ausführungsformen des erfindungsgemäßen Verfahrens durchführbar sind.

Die Erfindung betrifft darüber hinaus einen Server zur Verwendung als zentrale Stelle in dem erfindungsgemäßen Verfahren, wobei in dem Server einer Vielzahl von Sicherheitsstufen von Endgeräte-Konfigurationen jeweilige Applikations-Konfigurationen zugeordnet sind und der Server eine mittels einer Applikation an ihn gerichtete Anfrage zu einer vorgegebenen Endgeräte-Konfiguration derart verarbeiten kann, dass er in Antwort auf die Anfrage die vorgegebene Sicherheitsstufe der vorgegebenen Endgeräte-Konfiguration aus der Vielzahl von Sicherheitsstufen ermittelt und zusammen mit der zugeordneten Applikations-Konfiguration an die Applikation ausgibt.

Die Erfindung umfasst darüber hinaus ein Endgerät, welches eine vorgegebene Endgeräte-Konfiguration mit vorgegebener Sicherheitsstufe aufweist, wobei das Endgerät zumindest einen Teil einer Applikation beinhaltet, welche für das Endgerät mit dem erfindungsgemäßen Verfahren bzw. einer oder mehreren Ausführungsformen des erfindungsgemäßen Verfahrens konfigurierbar ist.

Ausführungsbeispiele der Erfindung werden nachfolgend anhand der beigefügten Figuren detailliert beschrieben.

Es zeigen:
- Fig. 1: eine schematische Darstellung eines Systems gemäß einer Ausführungsform der Erfindung; und
- Fig. 2: eine schematische Darstellung der im System der Fig. 1 zur Konfiguration einer Applikation durchgeführten Verfahrensschritte.

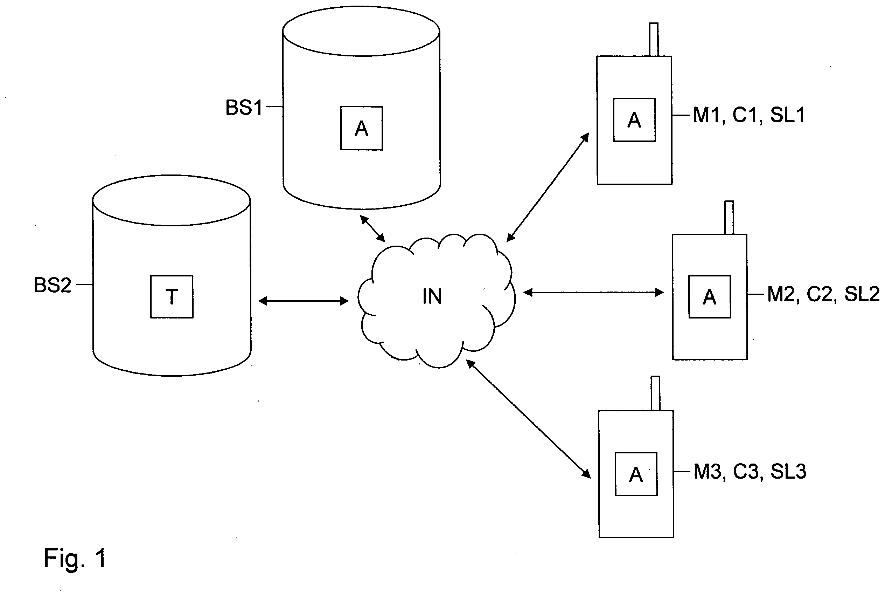

Nachfolgend wird eine Ausführungsform der Erfindung basierend auf der Konfiguration einer verteilten Applikation erläutert, bei der ein Teil der Applikation in der Form eines Applikations-Frontends auf einem Endgerät läuft und ein anderer Teil der Applikation, der einen wesentlichen Teil der Applikationslogik enthält, in einem Hintergrundsystem installiert ist. In Fig. 1 sind beispielhaft drei Endgeräte M1, M2 und M3 wiedergegeben, welche jeweils entsprechende Endgeräte-Konfigurationen C1, C2 bzw. C3 enthalten. Jede Endgeräte-Konfiguration betrifft dabei verschiedene Sicherheitslösungen in Bezug auf die Ausführung der Applikation auf den jeweiligen Mobiltelefonen. Solche Sicherheitslösungen sind insbesondere unterschiedliche Ausführungsumgebungen, beispielsweise verschiedene gesicherte Laufzeitumgebungen in dem Mikroprozessor des Endgeräts (z.B. ARM TrustZone®) oder verschiedene Sicherheitselemente (englisch: secure elements), wie z.B. die USIM/SIM-Karte, eine µSD-Karte und dergleichen. Jede der Sicherheitslösungen C1 bis C3 spezifiziert ferner ein Sicherheitsniveau bzw. eine Sicherheitsstufe SL1, SL2 bzw. SL3, wobei durch die Sicherheitsstufe angegeben wird, wie sicher die entsprechende Sicherheitslösung vor Angriffen unbefugter Dritter ist.

Auf jedem der Endgeräte M1 bis M3 ist ein erster Teil der Applikation A hinterlegt, der mit einem anderen Teil der Applikation A kommuniziert, der in dem Hintergrundsystem BS1 abläuft. Das Hintergrundsystem kann beispielsweise der Server einer Bank sein, mit dem eine Zahlungsapplikation zwischen dem Server und den Endgeräten durchgeführt wird. Das Hintergrundsystem kommuniziert dabei mittels der Applikation A mit den einzelnen Endgeräten unter Zwischenschaltung des Internets IN, wie durch entsprechende Doppelpfeile angedeutet ist. Die Applikation A ist für jedes Endgerät die gleiche Applikation, wobei mit dem hier beschriebenen Verfahren sichergestellt wird, dass der Betrieb der gleichen Applikation auch für verschiedene Sicherheitslösungen C1 bis C3 ermöglicht wird. Dies wird dadurch erreicht, dass die Applikationen auf den einzelnen Endgeräten in Abhängigkeit von der verwendeten Sicherheitslösung geeignet konfiguriert werden.

Zur Konfiguration der jeweiligen Applikation auf den Endgeräten M1 bis M3 wird eine zentrale Stelle in der Form eines weiteren Hintergrundsystems BS2 verwendet, welches wiederum über das Internet IN mit dem Hintergrundsystem BS1 und gegebenenfalls auch direkt mit den einzelnen Endgeräten M1 bis M3 kommunizieren kann. In der zentralen Stelle BS2 ist eine Tabelle T mit Verwaltungsinformationen hinterlegt. Insbesondere enthält die Tabelle für eine Vielzahl von verschiedenen Sicherheitsstufen jeweils eine Applikationskonfiguration in der Form von Applikationseinstellungen. Über die zentrale Stelle BS2 kann das Hintergrundsystem BS1 basierend auf der Sicherheitslösung des entsprechenden Endgeräts die zugeordnete Sicherheitsstufe dieser Sicherheitslösung abfragen und die entsprechenden Applikationseinstellungen ausgeben. Daraufhin können dann unter Verwendung der Applikationseinstellungen Funktionen der Applikation auf dem entsprechenden Endgerät freigeschaltet werden.

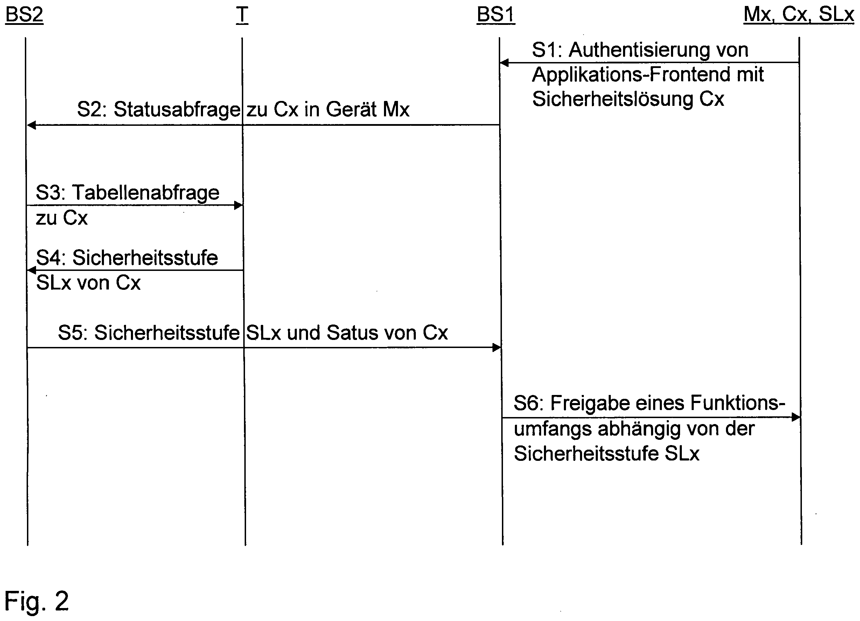

Fig. 2 zeigt ein Diagramm, welches den Ablauf des im System der Fig. 1 durchgeführten Verfahrens verdeutlicht. Entlang der einzelnen vertikalen Linien sind dabei die entsprechenden Komponenten des Systems wiedergegeben, nämlich ein Endgerät Mx mit entsprechender Sicherheitslösung Cx und Sicherheitsstufe SLx (x = 1, 2, 3), die Hintergrundsysteme BS1 und BS2 sowie die Tabelle T im Hintergrundsystem BS2. In Schritt S1 des Verfahrens authentisiert sich das auf dem Endgerät Mx hinterlegte Applikations-Frontend zunächst bei dem Hintergrundsystem BS1, welches basierend auf der Applikation mit dem Applikations-Frontend wechselwirkt. Wie bereits erwähnt, enthält das Hintergrundsystem BS1 dabei einen wesentlichen Teil der Applikations-Logik. Die Authentisierung erfolgt basierend auf entsprechenden Authentisierungsdaten des Endgeräts, z.B. mittels eines kryptographischen Schlüssels, der dem Endgerät Mx zugeordnet ist.

Nach erfolgreicher Authentisierung richtet das Hintergrundsystem BS1 in Schritt S2 eine Statusanfrage zu der Sicherheitslösung Cx des Endgeräts Mx an die zentrale Stelle BS2, wobei die Statusanfrage in einer bevorzugten Variante über einen kryptographisch gesicherten Kanal (englisch: secure channel) erfolgt. Basierend auf der Statusanfrage richtet dann die zentrale Stelle BS2 in Schritt S3 eine Tabellenabfrage zu der Sicherheitslösung Cx an die Tabelle T, welche daraufhin die Tabelleneinträge durchsucht und in Schritt S4 die Sicherheitsstufe SLx der Sicherheitslösung Cx ausgibt. Anschließend wird in Schritt S5 die ausgegebene Sicherheitsstufe SLx zusammen mit dem Status der Sicherheitslösung Cx, d.h. zusammen mit den Applikationseinstellungen, die für die Sicherheitsstufe SLx in der Tabelle T hinterlegt sind, an das Hintergrundsystem BS1 ausgegeben. Daraufhin wird in Schritt S6 in dem Endgerät ein Funktionsumfang basierend auf den entsprechenden Applikationseinstellungen freigegeben Anschließend kann die Applikation gemäß dem freigegebenen Funktionsumfang genutzt werden.

Das System ist vorzugsweise eingerichtet, eine Vielzahl unterschiedlicher Applikationen zu unterstützen. Das Hintergrundsystem BS2 als zentrale Stelle weist zu jeder Sicherheitslösung Cx eine Sicherheitsstufe SLx auf. Diese Zuordnung ist vorzugsweise applikationsunabhängig. Unabhängig von einer vorgegebenen Applikation hat ein Endgerät bzw. dessen Sicherheitslösung genau eine Sicherheitsstufe SLx. Zu jeder Sicherheitsstufe SLx weist das Hintergrundsystem für die Applikation eine zugeordnete Applikations-Konfiguration (Einstellungen) auf. Diese Zuordnung ist applikationsabhängig. Abhängig von der vorgegebenen Applikation existiert für die ermittelte Sicherheitsstufe SLx eine zugeordnete Applikations-Konfiguration.

Die im Vorangegangenen beschriebene Ausführungsform des erfindungsgemäßen Verfahrens weist den Vorteil auf, dass ein und dieselbe Applikation auf verschiedenen Endgeräten mit unterschiedlichen Sicherheitslösungen zusammenarbeiten kann. Dabei wird die Konfiguration der Applikation unter Verwendung einer zentralen Stelle durchgeführt, so dass die Applikation selbst nicht die unterschiedlichen Sicherheitsstufen der Sicherheitslösungen und die diesen Sicherheitsstufen zugeordneten Applikationseinstellungen kennen muss. Hierdurch werden die Kosten für den Betrieb einer Sicherheits-Infrastruktur gesenkt, und viele Benutzer mit unterschiedlichen Endgeräten können einen Dienst basierend auf einer geeignet konfigurierten Applikation nutzen, ohne dass unterschiedliche Versionen der Applikationen vorab bereitgestellt werden müssen.

## Patentansprüche

1. Verfahren zum Konfigurieren einer Applikation (A) für ein Endgerät (M1, M2, M3), welches eine vorgegebene Endgeräte-Konfiguration (C1, C2, C3) mit einer vorgegebenen Sicherheitsstufe (SL1, SL2, SL3) aufweist, wobei unterschiedliche Endgeräte-Konfigurationen (C1, C2, C3) eine oder mehrere verschiedene gesicherte Laufzeitumgebungen in einem Mikroprozessor des Endgeräts (M1, M2, M3) und/oder eine oder mehrere Sicherheitselemente des Endgeräts (M1, M2, M3) als Sicherheitslösungen zum Ausführen der Applikation (A) auf dem Endgerät (M1, M2, M3) spezifizieren, wobei jede der Endgeräte-Konfigurationen (C1, C2, C3) genau eine Sicherheitsstufe (SL1, SL2, SL3) bezüglich Angriffen unbefugter Dritter spezifiziert, wobei diese Applikation (A) für Endgeräte (M1, M2, M3) mit unterschiedlichen Endgeräte-Konfigurationen (C1, C2, C3) verwendbar ist, wobei
a) mittels der Applikation (A) eine Anfrage zu der vorgegebenen Endgeräte-Konfiguration (C1, C2, C3) an eine zentrale Stelle (BS2) basierend auf der Endgeräte-Konfiguration des Endgeräts (M1, M2, M3) gerichtet wird, in welcher einer Vielzahl von Sicherheitsstufen (SL1, SL2, SL3) von Endgeräte-Konfigurationen (C1, C2, C3) jeweilige Applikations-Konfigurationen (AP1, AP2, AP3) der Applikation (A) zugeordnet und hinterlegt sind, woraufhin die zentrale Stelle (BS2) in Antwort auf die Anfrage die vorgegebene Sicherheitsstufe (SL1, SL2, SL3) der vorgegebenen Endgeräte-Konfiguration (C1, C2, C3) aus der Vielzahl von Sicherheitsstufen (SL1, SL2, SL3) ermittelt und die der ermittelten Sicherheitsstufe (SL1, SL2, SL3) zugeordnete Applikations-Konfiguration (AP1, AP2, AP3) an die Applikation (A) ausgibt;
b) mittels der Applikation (A) eine oder mehrere Funktionen der Applikation (A) basierend auf der ausgegebenen Applikations-Konfiguration (AP1, AP2, AP3) für das Endgerät (M1, M2, M3) konfiguriert werden.

2. Verfahren nach einem der vorhergehende Ansprüche, **dadurch gekennzeichnet, dass** die Vielzahl von Sicherheitsstufen (SL1, SL2, SL3) mit zugeordneten Applikations-Konfigurationen in einer Tabelle (T) in der zentralen Stelle (BS2) hinterlegt sind, wobei in Schritt a) über eine Tabellenabfrage die vorgegebene Sicherheitsstufe (SL1, SL2, SL3) der vorgegebenen Endgeräte-Konfiguration (C1, C2, C3) aus der Vielzahl von Sicherheitsstufen (SL1, SL2, SL3) von Endgeräte-Konfigurationen (C1, C2, C3) ermittelt wird.

3. Verfahren nach einem der vorhergehenden Ansprüche, **dadurch gekennzeichnet, dass** in Schritt a) die Anfrage zu der vorgegebenen Engeräte-Konfiguration (C2, C3, C3) sowie die darauf basierende Ausgabe der zentralen Stelle (BS2) über einen oder mehrere kryptographisch gesicherte Kanäle übermittelt werden.

4. Verfahren nach einem der vorhergehenden Ansprüche, **dadurch gekennzeichnet, dass** sich das Endgerät (M1, M2, M3) mit Authentisierungsdaten, insbesondere mit einem oder mehreren Schlüsseln, authentisiert, wobei anschließend mit Hilfe der Authentisierungsdaten die vorgegebene Sicherheitsstufe (SL1, SL2, SL3) in der zentralen Stelle (BS2) ermittelt wird.

5. Verfahren nach einem der vorhergehenden Ansprüche, **dadurch gekennzeichnet, dass** die Applikation (A) eine verteilte Applikation ist, wobei ein Teil der Applikation (A) auf dem Endgerät (M1, M2, M3) und ein Teil der Applikation (A) auf einem mit dem Endgerät (M1, M2, M3) kommunizierenden Hintergrundsystem (BS1) abläuft.

6. Verfahren nach Anspruch 1, **dadurch gekennzeichnet, dass** in Schritt a) die Anfrage zu der vorgegebenen Endgeräte-Konfiguration (C1, C2, C3) über den Server (BS1) an die zentrale Stelle (BS2) gerichtet wird.

7. Verfahren nach Anspruch 6, **dadurch gekennzeichnet, dass** sich das Endgerät (M1, M2, M3) vor der über den Server (BS1) an die zentrale Stelle (BS2) gerichteten Anfrage am Server (BS1) über Authentisierungsdaten authentisieren muss, wobei die Authentisierungsdaten vorzugsweise zur Ermittlung der vorgegebenen Sicherheitsstufe (SL1, SL2, SL3) der vorgegebenen Endgeräte-Konfiguration (C1, C2, C3) in der zentralen Stelle (BS2) verwendet werden.

8. Verfahren nach einem der vorhergehende Ansprüche, **dadurch gekennzeichnet, dass** durch die Applikation (A) das Vorhandensein der vorgegebenen Endgeräte-Konfiguration (C1, C2, C3) auf dem Endgerät (M1, M2, M3) und/oder die Zuordnung der in Schritt b) konfigurierten Funktionen der Applikation (A) zu der vorgegebenen Endgeräte-Konfiguration des Endgeräts (M1, M2, M3) verifiziert werden, wobei nur bei erfolgreicher Verifikation die Konfiguration der Applikation erfolgreich abgeschlossen werden kann.

9. Verfahren nach einem der vorhergehenden Ansprüche, **dadurch gekennzeichnet, dass** als das oder die Funktionen der Applikation (A) ein Limit einer mit der Applikation (A) durchführbaren monetären Transaktion und/oder ein Gültigkeitszeitraum von einem oder mehreren Authentisierungsschlüsseln der Applikation (A) und/oder die Laufzeit von mit der Applikation (A) erwerbbaren elektronischen Tickets konfiguriert werden.

10. System zum Konfigurieren einer Applikation (A) für ein Endgerät (M1, M2, M3), mit: einem Server (BS1) und einem Endgerät (M1, M2, M3), wobei das Endgerät (M1, M2, M3) eine vorgegebene Endgeräte-Konfiguration (C1, C2, C3) mit einer vorgegebenen Sicherheitsstufe (SL1, SL2, SL3) aufweist, wobei unterschiedliche Endgeräte-Konfigurationen (C1, C2, C3) eine oder mehrere verschiedene gesicherte Laufzeitumgebungen in einem Mikroprozessor des Endgeräts (M1, M2, M3) und/ oder eine oder mehrere Sicherheitselemente des Endgeräts (M1, M2, M3) als Sicherheitslösungen zum Ausführen der Applikation (A) auf dem Endgerät (M1, M2, M3) spezifizieren, wobei jede der Endgeräte-Konfigurationen (C1, C2, C3) genau eine Sicherheitsstufe (SL1, SL2, SL3) bezüglich Angriffen unbefugter Dritter spezifiziert, wobei diese Applikation (A) für Endgeräte (M1, M2, M3) mit unterschiedlichen Endgeräte-Konfigurationen (C1, C2, C3) ver-wendbar ist, und einer zentralen Stelle (BS2), in welcher einer Vielzahl von Sicherheitsstufen (SL1, SL2, SL3) von Endgeräte-Konfigurationen (C1, C2, C3) jeweilige Applikations-Konfigurationen (AP1, AP2, AP3) zugeordnet und hinterlegt sind, wobei das System derart ausgestaltet ist, dass ein Verfahren durchführbar ist, bei dem
a) mittels der Applikation (A) eine Anfrage zu der vorgegebenen Endgeräte-Konfiguration (C1, C2, C3) an eine zentrale Stelle (BS2) basierend auf der Endgeräte-Konfiguration des Endgeräts (M1, M2, M3) gerichtet wird, in welcher einer Vielzahl von Sicherheitsstufen (SL1, SL2, SL3) von Endgeräte-Konfigurationen (C1, C2, C3) jeweilige Applikations-Konfigurationen (AP1, AP2, AP3) der Applikation (A) zugeordnet sind, woraufhin die zentrale Stelle (BS2) in Antwort auf die Anfrage die vorgegebene Sicherheitsstufe (SL1, SL2, SL3) der vorgegebenen Endgeräte-Konfiguration (C1, C2, C3) aus der Vielzahl von Sicherheitsstufen (SL1, SL2, SL3) ermittelt und die der ermittelten Sicherheitsstufe (SL1, SL2, SL3) zugeordnete Applikations-Konfiguration (AP1, AP2, AP3) an die Applikation (A) ausgibt;
b) mittels der Applikation (A) eine oder mehrere Funktionen der Applikation (A) basierend auf der ausgegebenen Applikations-Konfiguration (AP1, AP2, AP3) für das Endgerät (M1, M2, M3) konfiguriert werden.

11. System nach Anspruch 10, **dadurch gekennzeichnet, dass** das System derart ausgestaltet ist, dass mit dem System ein Verfahren nach einem der Ansprüche 2 bis 9 durchführbar ist.

12. Server zur Verwendung als zentrale Stelle (BS2) in einem Verfahren nach einem der Ansprüche 1 bis 9, **dadurch gekennzeichnet, dass** in der zentralen Stelle (BS2) einer Vielzahl von Sicherheitsstufen (SL1, SL2, SL3) von Endgeräte-Konfigurationen (C1, C2, C3) jeweilige Applikations-Konfigurationen (AP1, AP2, AP3) zugeordnet sind und die zentrale Stelle (BS2) eine mittels einer Applikation (A) an ihn gerichtete Anfrage zu einer vorgegebenen Endgeräte-Konfiguration (C1, C2, C3) derart verarbeiten kann, dass er in Antwort auf die Anfrage die vorgegebene Sicherheitsstufe (SL1, SL2, SL3) der vorgegebenen Endgeräte-Konfiguration (C1, C2, C3) aus der Vielzahl von Sicherheitsstufen (SL1, SL2, SL3) ermittelt und die zugeordnete Applikations-Konfiguration an die Applikation (A) ausgibt.

13. Endgerät, welches eine vorgegebene Endgeräte-Konfiguration (C1, C2, C3) mit vorgegebener Sicherheitsstufe (SL1, SL2, SL3) aufweist, wobei eine Applikation (A) für Endgeräte (M1, M2, M3) mit unterschiedlichen Endgeräte-Konfigurationen (C1, C2, C3) verwendbar ist, **dadurch gekennzeichnet, dass** das Endgerät (M1, M2, M3) zumindest einen Teil einer Applikation (A) umfasst, welche für das Endgerät (M1, M2, M3) mit einem Verfahren nach einem der Ansprüche 1 bis 9 konfigurierbar ist.

## Claims

1. Method for configuring an application (A) for an end device (M1, M2, M3), the end device (M1, M2, M3) having a predefined end device configuration (C1, C2, C3) with a predefined security level (SL1, SL2, SL3),
wherein different end-device configurations (C1, C2, C3) specify one or more different secure runtime environments in a microprocessor of the end device (M1, M2, M3) and/or specify one or more hardware secure elements of the end device (M1, M2, M3) as security solutions for executing the application (A) on the end device (M1, M2, M3),
wherein each of the end device configurations (C1, C2, C3) specifies exactly one security level (SL1, SL2, SL3) with respect to attacks by unauthorized third parties,
wherein this application (A) is applicable to end devices (M1, M2, M3) with different end device configurations (C1, C2, C3), wherein:
a) directing, via the application (A), a query regarding the predetermined end device configuration (C1, C2, C3) to a central place (BS2) based on the end device configuration of the end device (M1, M2, M3), wherein in the central place (BS2) a plurality of security solutions (SL1, SL2, SL3) of end devices configurations (C1, C2, C3) are associated with respective application configurations (AP1, AP2, AP3) and stored therein, and ascertaining by the central place (BS2), in response to the querying, the predefined security level (SL1, SL2, SL3) of the predefined end device configuration (C1, C2, C3) and outputting by the central place (BS2) to the application (A1) on the end device (M1, M2, M3) the application configuration (AP1, AP2, AP3) associated with the ascertained security level (SL1, SL2, SL3);
b) one or several functions of the application (A) executed on the end device (M1, M2, M3) are configured on the basis of the output application configuration (AP1, AP2, AP3) for the end device (M1, M2, M3) by means of the application (A).

2. Method according to one of the preceding claims, wherein the multiplicity of security levels (SL1, SL2, SL3) with associated application configurations (AP1, AP2, AP3) are deposited in a table (T) in the central place (BS2), wherein according to step a) the predefined security level (SL1, SL2, SL3) of the predefined end-device configuration (C1, C2, C3) being ascertained from the multiplicity of security levels (SL1, SL2, SL3) of end-device configurations (C1, C2, C3) via a table query.

3. Method according to one of the preceding claims, wherein according to step a) the query about the predefined end-device configuration (C1, C2, C3) as well as the output based thereon from the central place (BS2) are transferred via one or several cryptographically secured channels.

4. Method according to one of the preceding claims, wherein the end-device (M1, M2, M3) authenticates itself with authentication data, preferably with one or more keys, wherein the predefined security level (SL1, SL2, SL3) being subsequently ascertained in the central place (BS2) using the authentication data.

5. Method according to one of the preceding claims, wherein the application (A) is a distributed application, wherein a part of the application (A) is executed on the end device (M1, M2, M3) and a part of the application (A) is executed on server (BS1) that communicates with the end device (M1, M2, M3).

6. Method according to claim 1, wherein according to step a) the query about the predefined end-device configuration (C1, C2, C3) is directed to the central place (BS2) via the server (BS1).

7. Method according to claim 6, wherein the end-device (M1, M2, M3) must authenticate itself on the server via authentication data, wherein preferably, the authentication data are used for ascertaining the predefined security level (SL1, SL2, SL3) of the predefined end device configuration (C1, C2, C3) in the central place (BS2).

8. Method according to one of the preceding claims, wherein the presence of the predefined end-device configuration (C1, C2, C3) on the end-device (M1, M2, M3) and/or the association of the functions of the application (A) configured with the predefined end-device configuration (C1, C2, C3) of the end-device (M1, M2, M3) are verified by the application (A), wherein the configuration of the application (A) only being completable successfully upon successful verification.

9. Method according to one of the preceding claims, wherein there are configured as the one or several functions of the application (A) a limit of a monetary transaction performable with the application (A) and/or a period of validity of one or several authentication keys of the application (A) and/or the duration of electronic tickets acquirable with the application (A).

10. System for configuring an application (A) for an end-device (M1, M2, M3), the system comprising:
a server (BS1) and an end-device (M1, M2, M3), wherein the end device (M1, M2, M3) having a predefined end-device configuration (C1, C2, C3) with a predefined security level (SL1, SL2, SL3),
wherein different end-device configurations (C1, C2, C3) specify one or more different secure runtime environments in a microprocessor of the end device (M1, M2, M3) and/or specify one or more hardware secure elements of the end device (M1, M2, M3) as security solutions for executing the application (A) on the end device (M1, M2, M3),
wherein each of the end device configurations (C1, C2, C3) specifies exactly one security level (SL1, SL2, SL3) with respect to attacks by unauthorized third parties,
wherein this application (A) is applicable to end devices (M1, M2, M3) with different end device configurations (C1, C2, C3); and
a central place (BS2) in which a multiplicity of security levels (SL1, SL2, SL3) of end-device configurations (C1, C2, C3) have respective application configurations (AP1, AP2, AP3) associated therewith and stored therein,
wherein the system being configured to carry out a method including:
a) directing, via the application (A), a query regarding the predetermined end device configuration (C1, C2, C3) to a central place (BS2) based on the end device configuration of the end device (M1, M2, M3), wherein in the central place (BS2) a plurality of security solutions (SL1, SL2, SL3) of end devices configurations (C1, C2, C3) are associated with respective application configurations (AP1, AP2, AP3), and ascertaining by the central place (BS2), in response to the querying, the predefined security level (SL1, SL2, SL3) of the predefined end device configuration (C1, C2, C3) and outputting by the central place (BS2) to the application (A1) on the end device (M1, M2, M3) the application configuration (AP1, AP2, AP3) associated with the ascertained security level (SL1, SL2, SL3);
b) one or several functions of the application (A) executed on the end device (M1, M2, M3) are configured on the basis of the output application configuration (AP1, AP2, AP3) for the end device (M1, M2, M3) by means of the application (A).

11. System of claim 10, wherein the system is configured such that a method according to one of the claims 2 to 9 is executable in the system.

12. Server for use as a central place (BS2) in a method according to one of the claims 1 to 9 wherein in the central place (BS2) a plurality of security solutions (SL1, SL2, SL3) of end devices configurations (C1, C2, C3) are associated with respective application configurations (AP1, AP2, AP3) and the central place (BS2) is configured to process a query related to a predefined end device configuration (C1, C2, C3) directed to it, wherein in response to the query the central place (BS2) ascertains the predefined security level (SL1, SL2, SL3) of the predefined end device (C1, C2, C3) from the plurality of security levels (SL1, SL2, SL3) and outputs the associated application configuration (AP1, AP2, AP3) to the application (A).

13. End device (M1, M2, M3) comprising a predefined end device configuration (C1, C2, C3) with a predefined security level (SL1, SL2, SL3), wherein one application (A) is applicable to end devices (M1, M2, M3) wit different end device configurations (C1, C2, C3), wherein the end device (M1, M2, M3) comprises at least a part of the application (A), which is configurable for the end device (M1, M2, M3) with a method according to one of the claims 1 to 9.

## Revendications

1. Procédé de configuration d'une application (A) pour un terminal (M1,M2,M3), lequel comporte une configuration de terminal prédéfinie (C1,C2,C3) avec un niveau de sécurité prédéfini (SL1,SL2,SL3), différentes configurations de terminal (C1,C2,C3) spécifiant un ou plusieurs environnements de temps de fonctionnement sécurisés différents dans un microprocesseur du terminal (M1,M2,M3) et/ou un ou plusieurs éléments de sécurité du terminal (M1,M2,M3) en tant que solutions de sécurité pour exécuter l'application (A) sur le terminal (M1,M2,M3), chacune des configurations de terminal (C1,C2,C3) spécifiant exactement un niveau de sécurité (SL1,SL2,SL3) concernant les agressions de tiers non autorisés,
cette application (A) pouvant être utilisée pour des terminaux (M1,M2,M3) avec des configurations de terminal différentes (C1,C2,C3),
a) au moyen de l'application (A), une demande pour la configuration de terminal prédéfinie (C1,C2,C3) étant adressée à un poste central (BS2) en se basant sur la configuration de terminal du terminal (M1,M2,M3) dans lequel des configurations d'application respectives (AP1,AP2,AP3) de l'application (A) sont attribuées à une pluralité de niveaux de sécurité (SL1,SL2,SL3) de configurations de terminal (C1,C2,C3) et consignées,
à la suite de quoi le poste central (BS2) détermine en réponse à la demande le niveau de sécurité prédéfini (SL1,SL2,SL3) de la configuration de terminal prédéfinie (C1,C2,C3) à partir de la pluralité de niveaux de sécurité (SL1,SL2,SL3) et le niveau de sécurité déterminé (SL1,SL2,SL3) délivre la configuration d'application attribuée (AP1,AP2,AP3) à l'application (A),
b) au moyen de l'application (A), une ou plusieurs fonctions de l'application (A) étant configurées en se basant sur la configuration d'application délivrée (AP1,AP2,AP3) pour le terminal (M1,M2,M3) .

2. Procédé selon l'une quelconque des revendications précédentes, **caractérisé en ce que** la pluralité de niveaux de sécurité (SL1,SL2,SL3) avec des configurations d'application attribuées est consignée (BS2) dans un tableau (T) dans le poste central, dans une étape a) le niveau de sécurité prédéfini (SL1,SL2,SL3) de la configuration de terminal (C1,C2,C3) étant déterminé par une interrogation de tableau à partir de la pluralité de niveaux de sécurité (SL1,SL2,SL3) des configurations de terminal (C1,C2,C3) .

3. Procédé selon l'une quelconque des revendications précédentes, **caractérisé en ce que** dans l'étape a) la demande pour la configuration de terminal prédéfinie (C1,C2,C3) ainsi que la délivrance basée dessus du poste central (BS2) sont transmises par un ou plusieurs canaux à sécurisation cryptographique.

4. Procédé selon l'une quelconque des revendications précédentes, **caractérisé en ce que** le terminal (M1,M2,M3) s'authentifie avec des données d'authentification, notamment avec un ou plusieurs codes, le niveau de sécurité prédéfini (SL1,SL2,SL3) étant déterminé ensuite dans le poste central (BS2) à l'aide des données d'authentification.

5. Procédé selon l'une quelconque des revendications précédentes, **caractérisé en ce que** l'application (A) est une application répartie, une partie de l'application (A) se déroulant sur le terminal (M1,M2,M3) et une partie de l'application (A) sur un système d'arrière-plan (BS1) communiquant avec le terminal (M1,M2,M3) .

6. Procédé selon la revendication 1, **caractérisé en ce que** dans l'étape a) la demande pour la configuration de terminal prédéfinie (C1,C2,C3) est adressée au poste central (BS2) par le serveur (BS1).

7. Procédé selon la revendication 6, **caractérisé en ce que** le terminal (M1,M2,M3) doit s'authentifier sur le serveur (BS1) par les données d'authentification avant la demande adressée par le serveur (BS1) au poste central (BS2), les données d'authentification étant utilisées de préférence pour la détermination du niveau de sécurité prédéfini (SL1,SL2,SL3) de la configuration de terminal prédéfinie (C1,C2,C3) dans le poste central (BS2) .

8. Procédé selon l'une quelconque des revendications précédentes, **caractérisé en ce que** par l'application (A), l'existence de la configuration de terminal prédéfinie (C1,C2,C3) sur le terminal (M1,M2,M3) et/ou l'attribution des fonctions configurées dans l'étape b) de l'application (A) sont vérifiées pour la configuration de terminal prédéfinie du terminal (M1,M2,M3), la configuration de l'application ne pouvant être achevée avec succès qu'avec une vérification réussie.

9. Procédé selon l'une quelconque des revendications précédentes, **caractérisé en ce qu'**une limite d'une transaction monétaire exécutable avec l'application (A) et/ou une période de validité d'un ou plusieurs codes d'authentification de l'application (A) et/ou le temps de fonctionnement des tickets électroniques pouvant être acquis avec l'application (A) sont configurés en tant que la ou les fonctions de l'application (A).

10. Système de configuration d'une application (A) pour un terminal (M1,M2,M3), avec :
un serveur (BS1) et un terminal (M1,M2,M3), le terminal (M1,M2,M3) comportant une configuration de terminal prédéfini (C1,C2,C3) avec un niveau de sécurité prédéfini (SL1,SL2,SL3), différentes configurations de terminal (C1,C2,C3) spécifiant un ou plusieurs environnements de temps de fonctionnement sécurisés différents dans un microprocesseur du terminal (M1,M2,M3) et/ou un ou plusieurs éléments de sécurité du terminal (M1,M2,M3) en tant que solutions de sécurité pour exécuter l'application (A) sur le terminal (M1,M2,M3), chacune des configurations de terminal (C1,C2,C3) spécifiant exactement un niveau de sécurité (SL1,SL2,SL3) concernant les agressions de tiers non autorisés,
cette application (A) pouvant être utilisée pour des terminaux (M1,M2,M3) avec des configurations de terminal différentes (C1,C2,C3), et
un poste central (BS2) dans lequel des configurations d'application respectives (AP1,AP2,AP3) sont attribuées à une pluralité de niveaux de sécurité (SL1,SL2,SL3) de configurations de terminal (C1,C2,C3) et consignées, le système étant configuré de telle manière qu'un procédé peut être exécuté, pour lequel
a) au moyen de l'application (A), une demande pour la configuration de terminal prédéfinie (C1,C2,C3) est adressée à un poste central (BS2) en se basant sur la configuration de terminal du terminal (M1,M2,M3), dans lequel des configurations d'application respectives (AP1,AP2,AP3) de l'application (A) sont attribuées à une pluralité de niveaux de sécurité (SL1,SL2,SL3) des configurations de terminal (C1,C2,C3),
à la suite de quoi le poste central (BS2) détermine, en réponse à la demande, le niveau de sécurité prédéfini (SL1,SL2,SL3) de la configuration de terminal prédéfinie (C1,C2,C3) à partir de la pluralité de niveaux de sécurité (SL1,SL2,SL3) et délivre la configuration d'application (AP1,AP2,AP3) attribuée au niveau de sécurité déterminé (SL1,SL2,SL3) à l'application (A),
b) au moyen de l'application (A), une ou plusieurs fonctions de l'application (A) sont configurées en se basant sur la configuration d'application délivrée (AP1,AP2,AP3) pour le terminal (M1,M2,M3) .

11. Système selon la revendication 10 **caractérisé en ce que** le système est structuré de telle manière qu'un procédé peut être exécuté avec le système selon l'une quelconque des revendications 2 à 9.

12. Server destiné à être utilisé comme poste central (BS2) dans un procédé selon l'une quelconque des revendications 1 à 9, **caractérisé en ce que** dans le poste central (BS2) des configurations d'application respectives (AP1,AP2,AP3) sont attribuées à une pluralité de niveaux de sécurité (SL1, SL2, SL3) de configurations de terminal (C1,C2,C3) et le poste central (BS2) peut traiter une demande adressée qui lui est adressée au moyen d'une application (A) en une configuration de terminal préalablement définie (C1,C2,C3) de telle manière qu'il détermine en réponse à la demande le niveau de sécurité préalablement défini (SL1,SL2,SL3) de la configuration de terminal préalablement définie (C1,C2,C3) à partir de la pluralité de niveaux de sécurité (SL1,SL2,SL3) et délivre la configuration d'application attribuée à l'application (A).

13. Terminal, lequel comporte une configuration de terminal préalablement définie (C1,C2,C3) avec un niveau de sécurité préalablement défini (SL1,SL2,SL3), une application (A) pour terminaux (M1,M2,M3) pouvant être utilisée avec des configurations de terminal différentes (C1,C2,C3), **caractérisé en ce que** le terminal (M1,M2,M3) comprend au moins une partie d'une application (A), laquelle peut être configurée pour le terminal (M1,M2,M3) avec un procédé selon l'une quelconque des revendications 1 à 9.
